# EUROPÄISCHE PATENTANMELDUNG

(11) **EP 0 757 164 A1**
(43) Veröffentlichungstag der Anmeldung: **05.02.1997**
(21) Anmeldenummer: 96810380.4
(22) Anmeldetag: 10.06.1996
(51) Int. Cl.: F02C 7/228

(54) **Brennstoffzuführung für Gasturbinen mit Ringbrennkammer**

(30) Priorität: 03.07.1995 DE 19524213
(71) Anmelder: ASEA BROWN BOVERI AG, 5401 Baden (CH)
(72) Erfinder: Beeck, Alexander, Dr., 5304 Endingen (CH); Guthier, Klaus, 69469 Weinheim (DE); König, Marcel, 5423 Freienwil (CH); Senior, Peter, Dr., Countesthorpe, Leicester LE8 5PY (GB)
(74) Vertreter: Liebe, Rainer

(57) **Zusammenfassung**

Brennstoffzuführung für eine Gasturbine mit Ringbrennkammer (1) bei der die Betriebssicherheit der Gasturbine verbessert wird, indem nur eine zentrale Hauptgaszuleitung (15) und eine zentrale Pilotgaszuleitung (16) mit der Ringbrennkammer (1) verbunden sind. Im Inneren des Gasturbinengehäuses (5) oder einer an sich bekannten Brennerhaube (3) sind eine Hauptgas- und eine Pilotgasringleitung (13,14) ausgebildet. Diese Ringleitungen (13, 14) sind stromauf mit der Hauptgas- bzw. der Pilotgaszuleitung (15,16) und stromab mit der Ringbrennkammer (1) verbunden.

## Beschreibung

### Technisches Gebiet

Die Erfindung betrifft eine Brennstoffzuführung für Gasturbinen mit Ringbrennkammer, deren Brenner entweder mit gasförmigem oder mit flüssigem Brennstoff betrieben werden.

### Stand der Technik

Alle zum Betreiben von Gasturbinen benötigten Brennstoffe müssen von ausserhalb des Gasturbinengehäuses zugeführt werden. Abhängig von der Art und der Anzahl der Brenner sind unterschiedliche Brennstoff zuführungen bekannt, wobei in jedem Fall mehrere Ausnehmungen für die Brennstoff zuleitungen im Gasturbinengehäuse ausgebildet sind.

Aus der DE-A1 43 06 956-ist eine Brennstoffzuführung für eine Gasturbine mit Ringbrennkammer bekannt, welche mittels mehrerer, sowohl für flüssige als auch für gasförmige Brennstoffe geeigneter, Doppelkegelbrenner betrieben wird. Die Brenner werden über jeweils eine im Gasturbinengehäuse befestigte Brennstofflanze mit Flüssigbrennstoff gespeist, d.h. jeder Brenner hat seine eigene Brennstoffzuführung. Zur Einleitung der verschiedenen Brennstoffe in die Lanze dient jeweils ein separater Anschluss welcher am stromaufwärtigen Ende jeder Brennstofflanze mit den entsprechenden Zuführleitungen verschraubt ist. Das sind pro Brennstofflanze drei Anschlüsse, was bei einer Gasturbine mit wenigen Brennern kaum Probleme bereitet. Wird jedoch, wie bei Ringbrennkammern üblich, eine grössere Anzahl Brenner verwendet, ergibt sich eine Vielzahl von Anschlüssen und mit diesen verbundene Zuführleitungen. Es entsteht somit eine komplizierte, nur schwer überschaubare Brennstoffzuführung, welche sehr aufwendig bei der Montage bzw. der Demontage ist. Problematisch ist ausserdem die sichere Abdichtung einer so grossen Zahl von verschraubten Anschlüssen.

### Darstellung der Erfindung

Die Erfindung versucht, alle diese Nachteile zu vermeiden. Ihr liegt die Aufgabe zugrunde, eine einfache und kompakte Brennstoffzuführung für eine Gasturbine mit Ringbrennkammer zu schaffen. Ausserdem soll die Betriebssicherheit der Gasturbine verbessert werden.

Erfindungsgemäss wird dies dadurch erreicht, dass bei einer Vorrichtung gemäss dem Oberbegriff des Anspruchs 1, nur eine zentrale Hauptgaszuleitung und eine zentrale Pilotgaszuleitung mit der Ringbrennkammer verbunden sind. Im Inneren des Gasturbinengehäuses oder der Rückwand einer an sich bekannten Brennerhaube sind eine Hauptgas- und eine Pilotgasringleitung ausgebildet. Diese sind-stromauf mit der Hauptgas- bzw. der Pilotgaszuleitung sowie stromab mit der Ringbrennkammer verbunden.

Mit der Verlegung der Hauptgas- und der Pilotgasringleitung in das Innere des Gasturbinengehäuses bzw. der BrennerhaubenRückwand erhält diese drucktragende Wand eine weitere Funktion, nämlich die der Brennstoffverteilung zu den Brennern. Weil für jede der Ringleitungen nunmehr nur noch eine Hauptgas- bzw. eine Pilotgaszuleitung angeordnet sind, entsteht eine einfache und übersichtliche Brennstoffzuführung.

In einer ersten Ausführungsform der Erfindung sind die Hauptgas- und die Pilotgasringleitung im Inneren der Rückwand der Brennerhaube angeordnet. An dieser Rückwand sind sowohl die Hauptgas- als auch die Pilotgaszuleitung befestigt. Das Hauptgasrohr jedes Brenners mündet in der Rückwand der Brennerhaube. Bei wahlweise mit flüssigem oder gasförmigem Brennstoff zu betreibenden Brennern ist eine Brennstofflanze angeordnet, welche lediglich aus dem Flüssigbrennstoffkanal besteht.
Für jeden Brenner sind in der Rückwand der Brennerhaube zwei Verteilungsbohrungen angeordnet, welche die Hauptgas- bzw. die Pilotgasringleitung mit dem Hauptgasrohr bzw. der Pilotgasleitung verbinden. Sowohl im Hauptgasrohr als auch in der Pilotgasleitung des Brenners ist jeweils eine mit einer der Verteilungsbohrungen korrespondierende Öffnung ausgebildet.

Bei dieser Lösung erweist es sich als besonders günstig, dass sowohl das Hauptgas als auch das Pilotgas zentral und durch jeweils nur eine Ausnehmung des Gasturbinengehäuses zugeführt werden. Es erübrigen sich daher die bisher bekannten und je nach Anzahl der Brenner sehr zahlreichen sowie relativ grossen Ausnehmungen des Gasturbinengehäuses zur Aufnahme der Brennstofflanzen.

Für den Ölbetrieb der Gasturbine sind im Gasturbinengehäuse zusätzlich zu den beiden Ausnehmungen für den gasförmigen Brennstoff weitere, jedoch gering dimensionierte Ausnehmungen für die Brennstofflanzen, d.h. für deren Flüssigbrennstoffkanäle vorhanden. Dagegen werden bei reinem Gasbetrieb keine weiteren Ausnehmungen benötigt. Somit wird die Standfestigkeit des Gasturbinengehäuses wesentlich erhöht, was ein Betreiben der Gasturbinenanlage mit höheren Maschinendrücken erlaubt.

Besonders vorteilhaft ist es, wenn zwischen der inneren Oberfläche der Rückwand der Brennerhaube und der Hauptgas- bzw. der Pilotgasringleitung Einsatzrohre mit Dehnungsfugen angeordnet sind.
Die Einsatzrohre dienen der Verringerung von thermischen Spannungen, d.h. zur Isolierung der Ringleitungen gegenüber der heissen Rückwand der Brennerhaube, welche durch die in das Plenum strömende Verdichteraustrittsluft stark aufgeheizt wird. Dadurch wird natürlich auch das in die Ringleitungen einströmende Haupt- und Pilotgas nicht so stark erhitzt, was dessen gleichmässigere Verteilung zu allen Brennern zur Folge hat. Durchmesseränderungen der Einsatzrohre werden über die Dehnungsfugen ausgeglichen.

Es ist besonders zweckmässig, wenn die zentrale Hauptgas- und die zentrale Pilotgaszuleitung mit zumindest jeweils einem Befestigungselement in einer der Ausnehmungen des Gasturbinengehäuses befestigt sind. An den Befestigungselementen ist zumindest jeweils ein Dehnungselement angeordnet. Dabei handelt es sich vorzugsweise um eine Balghalterung, mit deren Hilfe die in den beiden Brennstoffzuleitungen herrschenden Differenzdrücke ausgeglichen werden. Auf diese Weise wird die Standzeit der gesamten Brennstoffzuführung erhöht.

Bei einer an sich bekannten, zweiteiligen Ringbrennkammer sind jeweils eine zentrale Hauptgas- und Pilotgaszuleitung, jedoch nur eine gemeinsame Hauptgas- und eine gemeinsame Pilotgasringleitung angeordnet.
Durch eine solche Ausbildung kann die Ringbrennkammer auf einfache Weise geöffnet werden, weil nur eine Hauptgas- bzw. Pilotgaszuleitung gelöst werden muss.

Bei einer mehrreihigen Anordnung der Brenner sind ebenfalls nur eine zentrale Hauptgas- und eine Pilotgaszuleitung, sowie eine Hauptgas- und eine Pilotgasringleitung ausgebildet. Die Hauptgas- und die Pilotgasringleitung sind zwischen den Brennerreihen angeordnet und über jeweils zwei in der Rückwand der Brennerhaube ausgebildete Verteilbohrungen mit den Hauptgasrohren bzw. den Pilotgasleitungen der entsprechenden Brenner beider Brennerreihen verbunden.

Dadurch wird der Vorteil einer einfachen und übersichtlichen Brennstoffzuführung auch bei einer wesentlich grösseren Anzahl von Brennern realisiert.

In einer nächsten Ausführungsform der Erfindung sind die Hauptgas- und die Pilotgasringleitung im Inneren des Gasturbinengehäuses angeordnet. Sowohl die Hauptgas- als auch die Pilotgaszuleitung sind am Gasturbinengehäuse befestigt. Die Hauptgasrohre ragen über das Gasturbinengehäuse hinaus. Der aus dem Gasturbinengehäuse herausragenden Teil der Hauptgasrohre geht jeweils in ein erstes Endstück über. An den Endstücken ist jeweils ein erster Anschluss für die Hauptgaszuleitung und ein zweiter Anschluss für die Pilotgaszuleitung angeordnet. Diese Anschlüsse sind auf an sich bekannte Weise im Inneren der Brennstofflanzen mit dem Hauptgasrohr bzw. der Pilotgasleitung verbunden. Zwischen der Hauptgasringleitung und dem ersten Anschluss sowie zwischen der Pilotgasringleitung und dem zweiten Anschluss ist jeweils eine Verbindungsleitung angeordnet und mit dem entsprechenden Anschluss verschraubt.

In einer Weiterbildung dieser Ausführungsform ist im Hauptgasrohr eine Brennstofflanze angeordnet, welche aus der Pilotgasleitung sowie dem Flüssigbrennstoffkanal besteht. Am stromaufwärtigen Ende des ersten Endstückes ist ein zweites Endstück kraftschlüssig befestigt, in welches der über einen dritten Anschluss mit einer Zuleitung verbundene Flüssigbrennstoffkanal auf an sich bekannte Weise hineinreicht.

Bei dieser Lösung wird durch den Wegfall ausserhalb des Gasturbinengehäuses angeordneter Ringleitungen und deren Befestigungen eine kompakte Bauweise erreicht.

In einer weiteren Ausführungsform der Erfindung sind die Hauptgas- und die Pilotgasringleitung ebenfalls im Inneren des Gasturbinengehäuses angeordnet. Jedoch münden die Hauptgasrohre und die Pilotgasleitungen bereits in jeweils einer der Ausnehmungen des Gasturbinengehäuses. Für jeden Brenner sind analog zur ersten Ausführungsform der Erfindung zwei Verteilungsbohrungen angeordnet, allerdings nicht in der Rückwand der Brennerhaube, sondern im Gasturbinengehäuse. Ebenso sind die beiden mit den Verteilungsbohrungen korrespondierenden Öffnungen im Hauptgasrohr bzw. in der Pilotgasleitung ausgebildet.

Die Hauptgasrohre der Brenner laufen stromauf jeweils in einem Flansch aus, welcher unmittelbar innen am Gasturbinengehäuse befestigt ist. Die Pilotgasleitungen sind stromauf mit jeweils einem deckelartigen Endstück stoffschlüssig verbunden. Diese Endstücke schliessen die Ausnehmungen des Gasturbinengehäuses nach aussen ab.

In einer Weiterbildung ist der Flüssigbrennstoffkanal über das deckelartige Endstück hinaus verlängert und endet in einem separaten Endstück, an dem die Zuleitung für den Flüssigbrennstoff über einen Anschluss angreift.

Durch die direkten Verbindungen der Hauptgasringleitung mit den Hauptgasrohren bzw. der Pilotgasringleitung mit den Pilotgasleitungen im Inneren des Gasturbinengehäuses, wird die Anzahl der an den Brennstofflanzen befestigten, lösbaren Anschlüsse wesentlich verringert. Es sind nur noch Anschlüsse für die Zuleitungen des Flüssigbrennstoffes vorhanden. Die separaten Verbindungsleitungen zu den Brennstofflanzen entfallen komplett. Damit werden nur noch relativ wenige Zuführleitungen benötigt, d.h. die Bauweise wird noch kompakter und die Abdichtung an den Anschlüssen einfacher.

### Kurze Beschreibung der Zeichnung

In der Zeichnung sind mehrere Ausführungsbeispiele der Erfindung anhand einer Gasturbine mit Ringbrennkammer dargestellt.

Es zeigen:
- Fig. 1: einen Teillängsschnitt der Gasturbine, mit Gasturbinengehäuse, Brennstofflanze und erfindungsgemässer Brennstoffzuführung, in einem ersten Ausführungsbeispiel;
- Fig. 2: einen Querschnitt durch eine zweiteilige Ringbrennkammer, mit der entsprechenden Anzahl von Brennstoffzuleitungen;
- Fig. 3: eine Darstellung entsprechend Fig. 1, jedoch mit zweireihiger Brenneranordnung;
- Fig. 4: einen Teillängsschnitt entsprechend Fig. 1, jedoch in einem anderen Ausführungsbeispiel, wobei zwei Varianten dargestellt sind;
- Fig. 5: einen Teillängsschnitt der Gasturbine, mit Brennstofflanze und erfindungsgemässer Brennstoffzuführung, in einem weiteren Ausführungsbeispiel.

Es sind nur die für das Verständnis der Erfindung wesentlichen Elemente gezeigt. Die Strömungsrichtung der Arbeitsmittel ist mit Pfeilen bezeichnet.

### Weg zur Ausführung der Erfindung

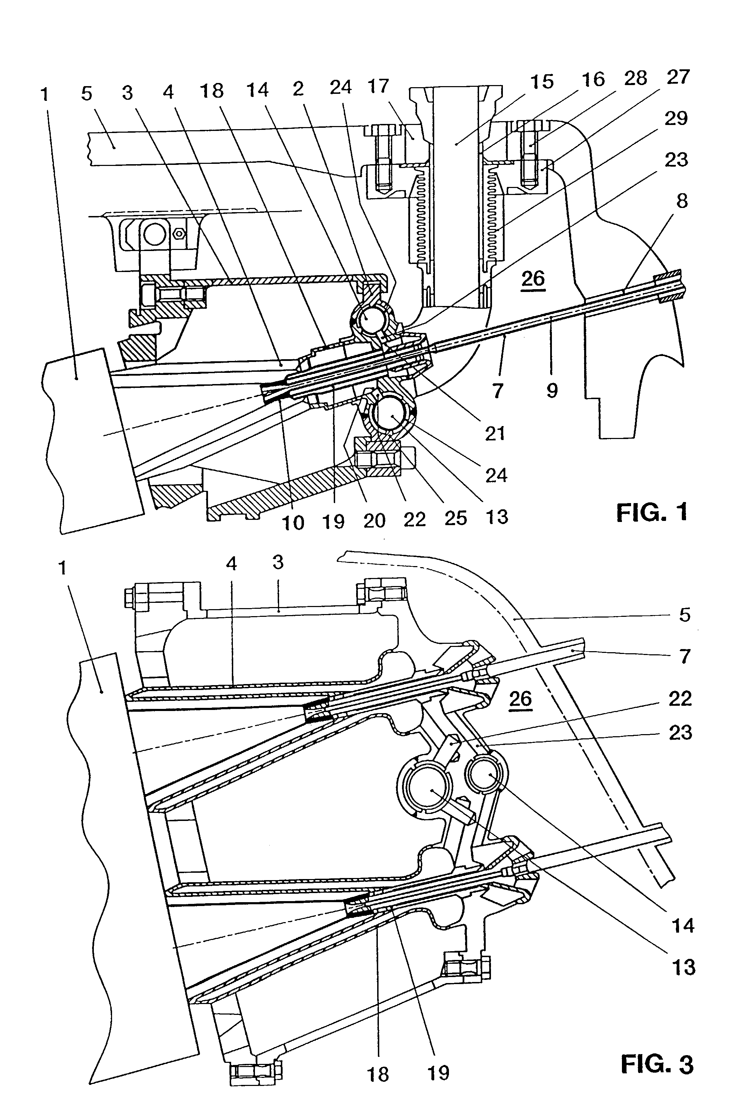

In einem ersten Ausführungsbeispiel wird eine Gasturbine mit einer Ringbrennkammer 1 und mehreren in der Rückwand 2 einer ringförmigen Brennerhaube 3 befestigten Brennern 4 dargestellt (Fig. 1). Die Brenner 4 sind entsprechend EP-B1 321 809 als sogenannte Doppelkegelbrenner ausgebildet. Sie werden von ausserhalb des Gasturbinengehäuses 5 mit Brennstoff versorgt.

Zur Zufuhr von Flüssigbrennstoff 6 ist jeder Doppelkegelbrenner 4 mit einer Brennstofflanze 7 verbunden, welche in jeweils einer Ausnehmung 8 des Gasturbinengehäuses 5 angeordnet sind. Die Brennstofflanzen 7 bestehen aus einer einzigen, als Flüssigbrennstoffkanal 9 ausgebildeten Brennstoffzuleitung und sind mit einer entsprechenden Düse 10 verbunden. Sie können daher relativ gering dimensioniert werden.

Die Brennstoffzuführung für gasförmigen Brennstoff 11, 12, d.h. für Haupt- und Pilotgas, besteht aus jeweils einer im Inneren der Rückwand 2 der Brennerhaube 3 angeordneten Hauptgasringleitung 13 und einer Pilotgasringleitung 14. Die Ringleitungen 13, 14 sind stromauf mit jeweils einer als Hauptgaszuleitung 15 bzw. als Pilotgaszuleitung 16 ausgebildeten, zentralen Brennstoffzuleitung verbunden, welche ihrerseits in Ausnehmungen 17 des Gasturbinengehäuses 5 befestigt sind. Stromab sind die Ringleitungen 13, 14 mit der Ringbrennkammer 1 verbunden.

Dazu ist jeder Doppelkegelbrenner 4 mit einem koaxialen Hauptgasrohr 18 verschweisst, welches in seinem Inneren eine Pilotgasleitung 19 und die Brennstofflanze 7 aufnimmt. Sowohl das Hauptgasrohr 18 als auch die Pilotgasleitung 19 münden in der Rückwand 2 der Brennerhaube 3. Sie sind dort über eine erste bzw. eine zweite Öffnung 20, 21 sowie jeweils eine damit korrespondierende und in der Rückwand 2 ausgebildete Verteilungsbohrung 22, 23 mit der Hauptgasringleitung 13 bzw. der Pilotgasringleitung 14 verbunden.

Bei ausschliesslich mit gasförmigem Brennstoff 11, 12 betriebenen Ringbrennkammern 1 sind keine Brennstofflanzen 7 erforderlich. In diesem Fall erfolgt die Brennstoffzuführung für die gesamte Ringbrennkammer 1 lediglich über die zentrale Hauptgas- und die zentrale Pilotgaszuleitung 15, 16. Demnach sind nur noch zwei Ausnehmungen 17 im Gasturbinengehäuse 5 ausgebildet, was dessen Standfestigkeit wesentlich erhöht.

Zwischen der inneren Oberfläche der Rückwand 2 und der darin angeordneten Hauptgas- bzw. der Pilotgasringleitung 13, 14 sind Einsatzrohre 24 mit Dehnungsfugen 25 angeordnet. Ausgehend von der Rückwand 2 der Brennerhaube 3 verlaufen die Hauptgas- und die Pilotgaszuleitung 15, 16 durch das sogenannte Plenum 26, einen verdichtete Luft führenden Raum innerhalb des Gasturbinengehäuses 5, und sind mit jeweils einem als Flansch ausgebildeten Befestigungselement 27 am Gasturbinengehäuse 5 fixiert. Dazu liegt der Flansch 27 innen am Gasturbinengehäuse 5 an und wird von aussen mittels zwei Schrauben 28 gehalten. Am jeweiligen Flansch 27 ist ein als Balghalterung ausgebildetes und in Befestigungs- sowie in Zugrichtung wirkendes Dehnungselement 29 angeordnet.

Beim Betrieb der Gasturbine wird das über die Hauptgas- und die Pilotgaszuleitung 15, 16 in die Ringleitungen 13, 14 eingeleitete Haupt- bzw. Pilotgas 11, 12 bereits innerhalb der drucktragenden Brennerhaube 3 an die Hauptgasrohre 18 und die Pilotgasleitungen 19 der Doppelkegelbrenner 4 verteilt. Auf diese Weise wird die Brennstoffzuführung wesentlich vereinfacht.
Alle Verbindungen der zwischen den Ringleitungen 13, 14 und den Doppelkegelbrennern 4 sind geschweisst. Damit werden potentielle Leckagen durch lösbare Schraubenverbindungen vermindert, die Betriebssicherheit der Gasturbine und ihre Verfügbarkeit steigt. Ausserdem ist auch eine schnelle Demontage gewährleistet da nur noch eine geringe Anzahl von Anschlüssen zu lösen ist.

Die Einsatzrohre 24 dienen der Wärmeisolierung des Haupt- und des Pilotgases 11, 12 gegenüber der im Plenum 26 befindlichen, heissen Verdichterluft. Damit wird einer zu starken Erwärmung des zunächst relativ kühlen gasförmigen Brennstoffes 11, 12 vorgebeugt und eine gleichmässige Brennstoffversorgung aller Doppelkegelbrenner 4 gewährleistet. Durchmesseränderungen der Einsatzrohre 24 werden über die Dehnungsfugen 25 ausgeglichen. Von der Balghalterung 29 werden die Differenzbewegungen der Hauptgas- bzw. der Pilotgaszuleitung 15, 16 aufgenommen.

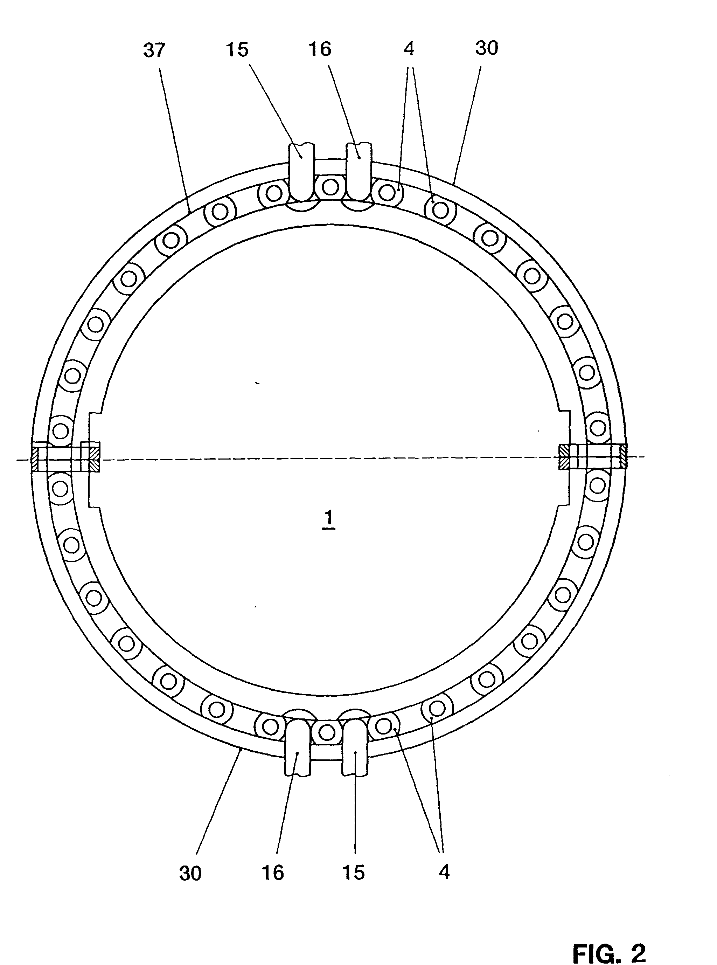

Bei einer horizontal geteilten Gasturbine ist auch die Ringbrennkammer 1 zweiteilig ausgebildet (Fig. 2). Je Ringteil 30 ist eine zentrale Hauptgas- und eine zentrale Pilotgaszuleitung 15, 16 angeordnet. Beim Öffnen der Ringbrennkammer 1 muss deshalb nur eine Hauptgas- und eine Pilotgaszuleitung 15, 16 gelöst werden.

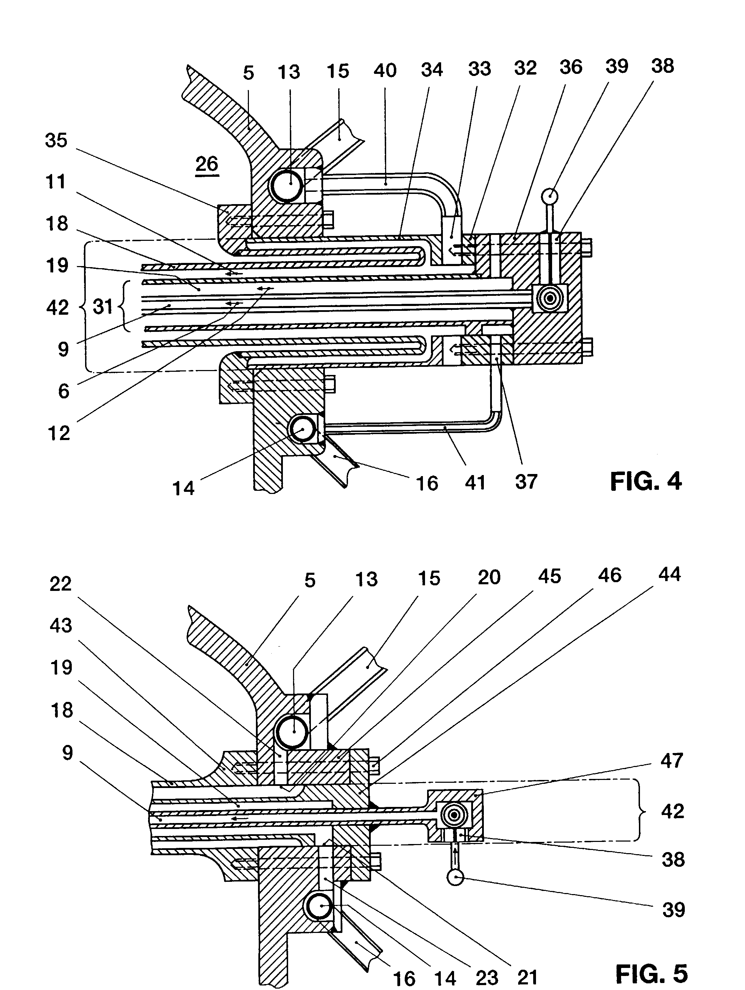

In einem zweiten Ausführungsbeispiel sind die Doppelkegelbrenner 4 zweireihig in der Ringbrennkammer 1 angeordnet (Fig. 3). Auch bei dieser Lösung sind nur eine (hier nicht dargestellte) zentrale Hauptgas- und eine Pilotgaszuleitung sowie eine Hauptgas- und eine Pilotgasringleitung 13, 14 ausgebildet. Die Ringleitungen 13, 14 sind zwischen den beiden Reihen der Doppelkegelbrenner 4 angeordnet und über jeweils zwei in der Rückwand 2 der Brennerhaube 3 ausgebildete Verteilungsbohrungen 22, 23 mit den Hauptgasrohren 18 bzw. den Pilotgasleitungen 19 der entsprechenden Doppelkegelbrenner 4 verbunden.

Dadurch ist die Brennstoffzuführung für eine Gasturbine auch bei einer zweireihigen Anordnung der Doppelkegelbrenner 4 einfach und übersichtlich gelöst.

In einem nächsten Ausführungsbeispiel der Erfindung (Fig. 4) sind alle Doppelkegelbrenner 4 einer Ringbrennkammer 1 am Gasturbinengehäuse 5 befestigt. Sie werden ebenfalls von ausserhalb des Gasturbinengehäuse 5 mit Flüssigbrennstoff 6 oder mit gasförmigem Brennstoff 11, 12 versorgt. Dazu ist jeder Doppelkegelbrenner 4 mit einem koaxialen Hauptgasrohr 18 verschweisst. Das Hauptgasrohr 18 nimmt eine Brennstofflanze 31 mit innenliegender Pilotgasleitung 19 und Flüssigbrennstoffkanal 9 auf. Ausgehend vom Doppelkegelbrenner 4 verläuft das Hauptgasrohr 18 durch das Plenum 26 und ist über das Gasturbinengehäuse 5 hinaus verlängert. Ausserhalb des Gasturbinengehäuses 5 geht das Hauptgasrohr 18 in ein erstes Endstück 32 über, in welchem seitlich ein erster Anschluss 33 für das Hauptgas 11 angebracht ist. Am ersten Endstück 32 ist ein das Hauptgasrohr 18 umgebendes Aussenrohr 34 angeschweisst, welches zurück zum Gasturbinengehäuse 5 verläuft. Das Aussenrohr 34 ist von ausserhalb des Gasturbinengehäuses 5 mit einem innerhalb angeordneten Flansch 35 verschraubt, so dass sowohl das Hauptgasrohr 18 als auch das erste Endstück 32 fest mit dem Gasturbinengehäuse 5 verbunden sind.

Ausserdem ist mit dem ersten Endstück 32 ein zweites Endstück 36 verschraubt, an dem seitlich ein zweiter Anschluss 37 für das Pilotgas 12 und ein dritter Anschluss 38 für eine weitere Zuleitung 39 angeordnet sind (dargestellt oberhalb der Brennstofflanze 31 in Fig. 4).
In einer zweiten Variante dieses Ausführungsbeispieles ist der zweite Anschluss 37, wie in Fig. 4 unterhalb der Brennstofflanze 31 gezeigt, am ersten Endstück 32 verschraubt. Dadurch kann beim Wechseln des Flüssigbrennstoffkanals 9 das zweite Endstück 36 entfernt werden, ohne auch den zweiten Anschluss 37 für das Pilotgas 12 lösen zu müssen.

Die Zuführung für den gasförmigen Brennstoff 11, 12 besteht aus der im Inneren des Gasturbinengehäuses 5 angeordneten Hauptgasringleitung 13 und der Pilotgasringleitung 14. Die Ringleitungen 13, 14 sind stromauf mit der zentralen Hauptgaszuleitung 15 bzw. der zentralen Pilotgaszuleitung 16 verbunden, welche ihrerseits am Gasturbinengehäuse 5 befestigt sind. Stromab sind die Ringleitungen 13, 14 mit der Ringbrennkammer 1 verbunden. Dazu ist zwischen der Hauptgasringleitung 13 und dem ersten Anschluss 33 sowie zwischen der Pilotgasringleitung 14 und dem zweiten Anschluss 37 jeweils eine Verbindungsleitung 40, 41 angeordnet.

Im Gasturbinengehäuse 5 ist eine der Zahl der Doppelkegelbrenner 4 entsprechende Anzahl von Ausnehmungen 42 ausgebildet, durch welche die Hauptgasrohre 18 führen und in denen sie mittels der Flansche 35 befestigt sind.

Zum Betrieb der Gasturbine wird das Hauptgas 11 über die zentrale Hauptgaszuleitung 15 in die Hauptgasringleitung 13 eingeleitet. Von dort aus wird es über die Verbindungsleitungen 40 auf die mit den Doppelkegelbrennern 4 verbundenen Hauptgasrohre 18 verteilt und letztlich in der Ringbrennkammer 1 verbrannt. Das zur Verbesserung des Regelbereichs der Doppelkegelbrenner 4 verwendete Pilotgas 12 gelangt über die zentrale Pilotgaszuleitung 16 in die Pilotgasringleitung 14. Seine Verteilung zu den Brennstofflanzen 31 erfolgt über die Verbindungsleitungen 41. Soll die Gasturbine mit Flüssigbrennstoff 6 betrieben werden, wird dieser über die am dritten Anschluss 38 angreifende Zuleitung 39 in die Brennstofflanzen 31 bzw. den Flüssigbrennstoffkanal 9 eingeleitet. Die Hauptgas- und die Pilotgaszuleitung 15, 16 sind dann geschlossen.

In einem weiteren Ausführungsbeispiel der Erfindung (Fig. 5) enden die Hauptgasrohre 18, einschliesslich der Pilotgasleitungen 19, in den Ausnehmungen 42 des Gasturbinengehäuses 5. Dazu laufen die Hauptgasrohre 18 der Doppelkegelbrenner 1 stromauf jeweils in einem Flansch 43 aus, der im montierten Zustand direkt innerhalb des Gasturbinengehäuses 5 anschliesst. Die Pilotgasleitung 19 wird von einem deckelartigen Endstück 44 abgeschlossen, welches gleichzeitig die Ausnehmung 42 des Gasturbinengehäuses 5 nach aussen verschliesst. In den Flanschen 43, den Endstücken 44 und den dazwischenliegenden Bereichen des Gasturbinengehäuses 5 sind miteinander korrespondierende, achsparallele Gewindebohrungen 45 ausgebildet. Die Hauptgasrohre 18 und die Pilotgasleitungen 19 sind mittels in den Gewindebohrungen 45 geführter Schrauben 46 lösbar am Gasturbinengehäuse 5 befestigt.

Im Gasturbinengehäuse 5 sind für jeden Doppelkegelbrenner 1 eine erste und eine zweite Verteilungsbohrung 22, 23 ausgebildet, welche die Hauptgas- bzw. die Pilotgasringleitung 13, 14 mit dem Hauptgasrohr 18 bzw. der Pilotgasleitung 19 verbinden. Letztere besitzen dazu jeweils eine, mit den Verteilungsbohrungen 22, 23 korrespondierende Öffnung 20, 21. Der Flüssigbrennstoffkanal 9 ist über das deckelartige Endstück 44 hinaus verlängert. Er endet in einem separaten Endstück 47, an dem die Zuleitung 39 über den Anschluss 38 angreift.

Bei diesem Ausführungsbeispiel erfolgt die Zufuhr von Hauptund Pilotgas 11, 12 in das Hauptgasrohr 18 bzw. die Pilotgasleitung 19 vorteilhaft innerhalb des Gasturbinengehäuses 5, so dass dafür keine zusätzlichen Leitungen und Anschlüsse erforderlich sind. Ausserdem können die Ausnehmungen 42 im Gasturbinengehäuse 5 durch die direkte Zuführung der gasförmigen Brennstoffe 11, 12 geringer dimensioniert werden.

### Bezugszeichenliste

- 1: Ringbrennkammer
- 2: Rückwand
- 3: Brennerhaube
- 4: Brenner, Doppelkegelbrenner
- 5: Gasturbinengehäuse
- 6: Flüssigbrennstoff, flüssiger Brennstoff
- 7: Brennstofflanze
- 8: Ausnehmung
- 9: Flüssigbrennstoffkanal, Brennstoffzuleitung
- 10: Düse
- 11: Hauptgas, gasförmiger Brennstoff
- 12: Pilotgas, gasförmiger Brennstoff
- 13: Hauptgasringleitung, Ringleitung
- 14: Pilotgasringleitung, Ringleitung
- 15: Hauptgaszuleitung, Brennstoffzuleitung
- 16: Pilotgaszuleitung, Brennstoffzuleitung
- 17: Ausnehmung
- 18: Hauptgasrohr
- 19: Pilotgasleitung
- 20: Öffnung, erste
- 21: Öffnung, zweite
- 22: Verteilungsbohrung
- 23: Verteilungsbohrung
- 24: Einsatzrohr
- 25: Dehnungsfuge
- 26: Plenum
- 27: Befestigungselement, Flansch
- 28: Schraube
- 29: Dehnungselement, Balghalterung
- 30: Ringteil
- 31: Brennstofflanze
- 32: Endstück, erstes
- 33: Anschluss, erster
- 34: Aussenrohr
- 35: Flansch
- 36: Endstück, zweites
- 37: Anschluss, zweiter
- 38: Anschluss, dritter
- 39: Zuleitung
- 40: Verbindungsleitung
- 41: Verbindungsleitung
- 42: Ausnehmung
- 43: Flansch
- 44: Endstück, deckelartig
- 45: Gewindebohrung
- 46: Schraube
- 47: Endstück, separates

## Patentansprüche

1. Brennstoffzuführung für Gasturbinen mit Ringbrennkammer (1), deren Brenner (4)
a) entweder mit gasförmigem (11, 12) oder mit flüssigem Brennstoff (6) betrieben werden,
b) den Brennstoff (6, 11, 12) über Brennstoffzuleitungen (9, 15, 16) von ausserhalb eines Gasturbinengehäuse (5) erhalten, wozu dieses entsprechende Ausnehmungen (8, 17, 42) aufweist,
c) jeweils ein stoffschlüssig mit ihnen verbundenes, ringförmiges Hauptgasrohr (18) tragen, welches in seinem Inneren eine Pilotgasleitung (19) und gegebenenfalls einen Flüssigbrennstoffkanal (9) aufnimmt,
dadurch gekennzeichnet, dass
d) mit der Ringbrennkammer (1) nur eine zentrale Hauptgaszuleitung (15) und eine zentrale Pilotgaszuleitung (16) verbunden sind,
e) im Inneren des Gasturbinengehäuses (5) oder der Rückwand (2) einer an sich bekannten Brennerhaube (3) eine Hauptgas- und eine Pilotgasringleitung (13, 14) ausgebildet sind,
f) die Hauptgas- und die Pilotgasringleitung (13, 14) stromauf mit der Hauptgas- bzw. der Pilotgaszuleitung (15, 16) sowie stromab mit der Ringbrennkammer (1) verbunden sind.

2. Brennstoffzuführung nach Anspruch 1, dadurch gekennzeichnet, dass
a) die Hauptgas- und die Pilotgasringleitung (13, 14) im Inneren der Rückwand (2) der Brennerhaube (3) angeordnet sind,
b) an der Rückwand (2) sowohl die Hauptgas- als auch die Pilotgaszuleitung (15, 16) befestigt sind,
c) das Hauptgasrohr (18) jedes Brenners (4) in der Rückwand (2) mündet, und
d) bei wahlweise mit flüssigem oder gasförmigem Brennstoff (6, 11, 12) zu betreibenden Brennern (4), im Hauptgasrohr (18) eine Brennstofflanze (7) angeordnet ist, welche lediglich aus dem Flüssigbrennstoffkanal (9) besteht.

3. Brennstoffzuführung nach Anspruch 2, dadurch gekennzeichnet, dass für jeden Brenner (4) zwei Verteilungsbohrungen (22, 23) in der Rückwand (2) der Brennerhaube (3) angeordnet sind, welche die Hauptgas- bzw. die Pilotgasringleitung (13, 14) mit dem Hauptgasrohr (18) bzw. der Pilotgasleitung (19) verbinden und im Hauptgasrohr (18) bzw. in der Pilotgasleitung (19) jedes Brenners (4) eine erste bzw. eine zweite, mit den Verteilungsbohrungen (22, 23) korrespondierende Öffnung (20, 21) ausgebildet ist.

4. Brennstoffzuführung nach Anspruch 2 oder 3, dadurch gekennzeichnet, dass zwischen der inneren Oberfläche der Rückwand (2) und der Hauptgas- bzw. der Pilotgasringleitung (13, 14) Einsatzrohre (24) mit Dehnungsfugen (25) angeordnet sind.

5. Brennstoffzuführung nach den Anspruch 4, dadurch gekennzeichnet, dass die Hauptgas- und die Pilotgaszuleitung (15, 16) mit zumindest jeweils einem Befestigungselement (27) in jeweils einer der Ausnehmungen (17) des Gasturbinengehäuses (5) befestigt sind und an den Befestigungselementen (27) zumindest jeweils ein Dehnungselement (29), vorzugsweise eine Balghalterung, angeordnet ist.

6. Brennstoffzuführung nach einem oder mehreren der vorhergehenden Ansprüche, dadurch gekennzeichnet, dass die Ringbrennkammer (1) auf an sich bekannte Weise zweiteilig ausgebildet ist, je Ringteil (30) eine zentrale Hauptgas- und eine zentrale Pilotgaszuleitung (15, 16) angeordnet, jedoch nur eine gemeinsame Hauptgas- und eine gemeinsame Pilotgasringleitung (13, 14) ausgebildet sind.

7. Brennstoffzuführung nach einem oder mehreren der vorhergehenden Ansprüche, dadurch gekennzeichnet, dass die Brenner (4) zweireihig angeordnet und mit nur einer zentralen Hauptgas- und einer zentralen Pilotgaszuleitung (15, 16) sowie mit nur einer Hauptgas- und einer Pilotgasringleitung (13, 14) verbunden sind, wobei letztere zwischen den Brennerreihen angeordnet und über jeweils zwei in der Rückwand (2) der Brennerhaube (3) ausgebildete Verteilungsbohrungen (22, 23) mit den Hauptgasrohren (18) bzw. den Pilotgasleitungen (19) der entsprechenden Brenner (4) beider Brennerreihen verbunden sind.

8. Brennstoffzuführung nach Anspruch 1, dadurch gekennzeichnet, dass
a) die Hauptgas- und die Pilotgasringleitung (13, 14) im Inneren des Gasturbinengehäuses (5) angeordnet sind,
b) die Hauptgas- sowie die Pilotgaszuleitung (15, 16) am Gasturbinengehäuse (5) befestigt sind, und
c) das Hauptgasrohr (18) jedes Brenners (4) zumindest bis zu einer Ausnehmung (42) des Gasturbinengehäuses (5) reicht.

9. Brennstoffzuführung nach Anspruch 8, dadurch gekennzeichnet, dass
a) die Hauptgasrohre (18) über das Gasturbinengehäuse (5) hinausragen,
b) der aus dem Gasturbinengehäuse (5) herausragende Teil der Hauptgasrohre (18) jeweils in ein erstes Endstück (32) übergeht, an welchem ein erster Anschluss (33) für die Hauptgaszuleitung (15) und ein zweiter Anschluss (37) für die Pilotgaszuleitung (16) angeordnet ist, wobei die Anschlüsse (33, 37) auf an sich bekannte Weise mit dem Hauptgasrohr (18) bzw. der Pilotgasleitung (19) verbunden sind,
c) zwischen der Hauptgasringleitung (13) und dem ersten Anschluss (33) sowie zwischen der Pilotgasringleitung (14) und dem zweiten Anschluss (37) jeweils eine Verbindungsleitung (40, 41) angeordnet ist.

10. Brennstoffzuführung nach Anspruch 9, dadurch gekennzeichnet, dass im Hauptgasrohr (18) eine Brennstofflanze (31) angeordnet ist, welche aus der Pilotgasleitung (19) sowie dem Flüssigbrennstoffkanal (9) besteht und am stromaufwärtigen Ende des ersten Endstückes (32) ein zweites Endstück (36) kraftschlüssig befestigt ist, in welches der über einen dritten Anschluss (38) mit einer Zuleitung (39) verbundene Flüssigbrennstoffkanal (9) auf an sich bekannte Weise hineinreicht.

11. Brennstoffzuführung nach Anspruch 8, dadurch gekennzeichnet, dass
a) das Hauptgasrohr (18) und die Pilotgasleitung (19) jedes Brenners (4) in einer der Ausnehmungen (42) des Gasturbinengehäuses (5) münden,
b) zwischen der Hauptgas- bzw. der Pilotgasringleitung (13, 14) und jeder der Ausnehmungen (42) jeweils eine erste und eine zweite Verteilungsbohrung (22, 23) angeordnet sind, und
c) im Hauptgasrohr (18) sowie in der Pilotgasleitung (19) jedes Brenners (4) jeweils eine Öffnung (20, 21) ausgebildet ist, welche mit den entsprechenden Verteilungsbohrungen (22, 23) korrespondieren.

12. Brennstoffzuführung nach Anspruch 11, dadurch gekennzeichnet, dass
a) die Hauptgasrohre (18) der Brenner (4) stromauf jeweils in einem Flansch (43) auslaufen,
b) der Flansch (43) unmittelbar innen am Gasturbinengehäuse (5) befestigt ist,
c) die Pilotgasleitungen (19) stromauf mit jeweils einem deckelartigen Endstück (44) stoffschlüssig verbunden sind,
d) die Ausnehmungen (42) des Gasturbinengehäuses (5) von den Endstücken (44) nach aussen abgeschlossen werden.

13. Brennstoffzuführung nach Anspruch 12, dadurch gekennzeichnet, dass der Flüssigbrennstoffkanal (9) über das deckelartige Endstück (44) hinaus verlängert ist und in ein separates Endstück (47) mündet, an dem die Zuleitung (39) über den Anschluss (38) angreift.
